# EUROPÄISCHE PATENTSCHRIFT

(11) **EP 0 762 613 B1**
(45) Veröffentlichungstag und Bekanntmachung des Hinweises auf die Patenterteilung: **17.11.1999**
(21) Anmeldenummer: 96112953.3
(22) Anmeldetag: 12.08.1996
(51) Int. Cl.: H02K 7/116, F16H 57/02

(54) **Motor-Getriebe-Antriebseinheit, insbesondere Kraftfahrzeug-Fensterheberantrieb oder dergleichen**
Geared motor-drive, in particular vehicle window winder or the like
Entraînement pour moto-réducteur notamment pour lêve-glace d'un véhicule ou pareilles applications

(30) Priorität: 25.08.1995 DE 29513701 U
(43) Veröffentlichungstag der Anmeldung: 12.03.1997
(73) Patentinhaber: SIEMENS AKTIENGESELLSCHAFT, 80333 München (DE)
(72) Erfinder: Klingler, Peter, Dipl.-Ing., 97277 Neubrunn (DE); Luckas, Thomas, Dipl.-Ing., 97273 Kürnach (DE)

(56) Entgegenhaltungen:
- EP-A- 0 642 207
- EP-A- 0 681 359
- DE-A- 3 815 511

## Beschreibung

Die Erfindung bezieht sich auf eine Motor-Getriebe-Antriebseinheit, insbesondere Kraftfahrzeug-Fensterheberantrieb oder dergleichen, gemäß Oberbegriff des Anspruchs 1; eine derartige Antriebseinheit ist durch die DE-U-93 11 529.6 bekannt.

In vorgenannten bekannten Fall ist zum feuchtigkeitsdichten Abschluß des Getriebegehäuses ein Getriebegehäusedeckel aufgeschraubt, der einerseits eine statische Dichtung in Form einer den Außenrand des Getriebegehäusedeckels umgreifenden aufgespritzten Flachdichtung mit bei Anlage des Getriebegehäusedeckels an das Getriebegehäuse dichtend preßbarer angeformter Dichtlippe und andererseits eine dynamische Dichtung in Form eines im Bereich einer Mittelöffnung für eine nach außen ragende Antriebswelle angespritzten Dichtrandes aufweist.

Gemäß Aufgabe vorliegender Erfindung soll bei weiterhin gewährleistetem feuchtigkeitsdichten Abschluß die Fertigung und Montage des durch einen Getriebegehäusedeckel verschließbaren Getriebegehäuses in für eine Massenfertigung eines Serienartikels vorteilhafter Weise weiter vereinfacht werden. Die Lösung dieser Aufgabe gelingt bei einer Motor-Getriebe-Antriebseinheit der eingangs genannten Art erfindungsgemäß durch die Lehre des Anspruchs 1; vorteilhafte Ausgestaltungen der Erfindung sind jeweils Gegenstand der Unteransprüche.

Bei dem erfindungsgemäßen feuchtigkeitsdichten Verschluß eines Getriebegehäuses durch einen Getriebegehäusedeckel erübrigen sich gesonderte Schraubverschlüsse, da der Getriebegehäusedeckel lediglich durch ein Eindrücken des umlaufenden Steges in eine herstellungstechnisch, insbesondere bei einem Spritzgußteil, einfach einbringbare umlaufende Rinne dicht festklemmbar ist; ein guter Preßsitz des umlaufenden Steges in der rinnenartigen Nut bei gleichzeitig nur geringem Einsteckdruck einerseits und eine besonders gute Abdichtung zwischen dem eindrückbaren umlaufenden Steg und der umfassenden ringartigen Nut andererseits ist dadurch möglich, daß gemäß Ausgestaltungen der Erfindung der umlaufende Steg an eine Seitenwandung der Nut über eine, vorzugsweise senkrecht zur Einsteckrichtung, umlaufende Schaberippe und an seiner anderen Seitenwandung über eine elastische Dichtungsauflage, insbesondere einen angespritzten statischen Dichtrand, angedrückt ist.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: in einem axialen Längsschnitt einen Kraftfahrzeug-Fensterheberantrieb;
- FIG 2: in perspektivischer Darstellung ein aus Kunststoff spritzgegossenes aber noch unbestücktes Getriebegehäuse des Fensterheberantriebs gemäß FIG 1;
- FIG 3: die axiale Draufsicht auf die getriebegehäuseinnere Stirnseite des Getriebegehäusedeckels;
- FIG 4: den Getriebegehäusedeckel gemäß FIG 3 im Schnittverlauf IV-IV;
- FIG 5: einen vergrößerten Teilausschnitt des Außenrandes des Getriebegehäusedeckels gemäß FIG 4;
- FIG 6: einen vergrößerten Teilausschnitt im Bereich des radial inneren, der Durchstecköffnung der Abtriebswelle zugewandten Teiles des Getriebegehäusedeckels gemäß FIG 4.

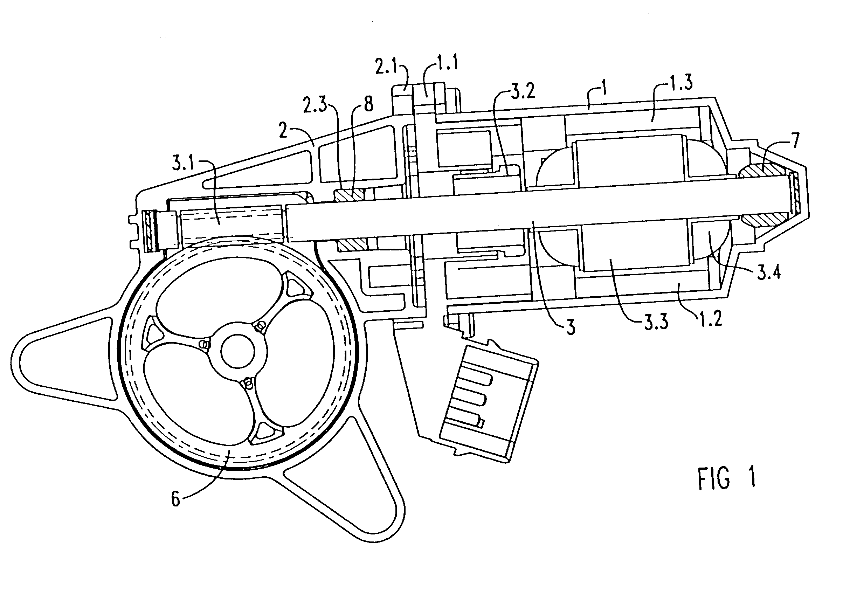

FIG 1 zeigt in einem axialen Längsschnitt eine Motor-Getriebe-Antriebseinheit für einen Kraftfahrzeug-Fensterheberantrieb mit einem topfförmigen Motorgehäuse 1, an dessen Stirnflansch 1.1 ein aus Kunststoff gespritztes Getriebegehäuse 2 mit einem korrespondierenden Stirnflansch 2.1 befestigt ist.

Eine in einem rechten motorgehäuseseitigen Wellenlager, insbesondere einem Kalottenlager 7, und in einem mittigen getriebegehäuseseitigen Wellenlager 8, insbesondere einem Zylinderlager 8, gelagerte Motor-Getriebe-Welle 3 ist an ihrem linken freien, fliegend gelagerten Wellenende mit einer Schneckenwelle 3.1 versehen, die mit einem abtriebsseitigen Schneckenrad 6 kämmt. Am Umfang des topfförmigen Motorgehäuses 1 sind Erregermagnete 1.2;1.3 gehalten. Die Motor-Getriebe-Welle 3 nimmt in ihrem rechten motorseitigen Teil ein Rotorpaket 3.3 auf, in das eine Rotorwicklung 3.4 eingewickelt und in hier nicht näher dargestellter Weise an einen Kommutator 3.2 angeschlossen ist.

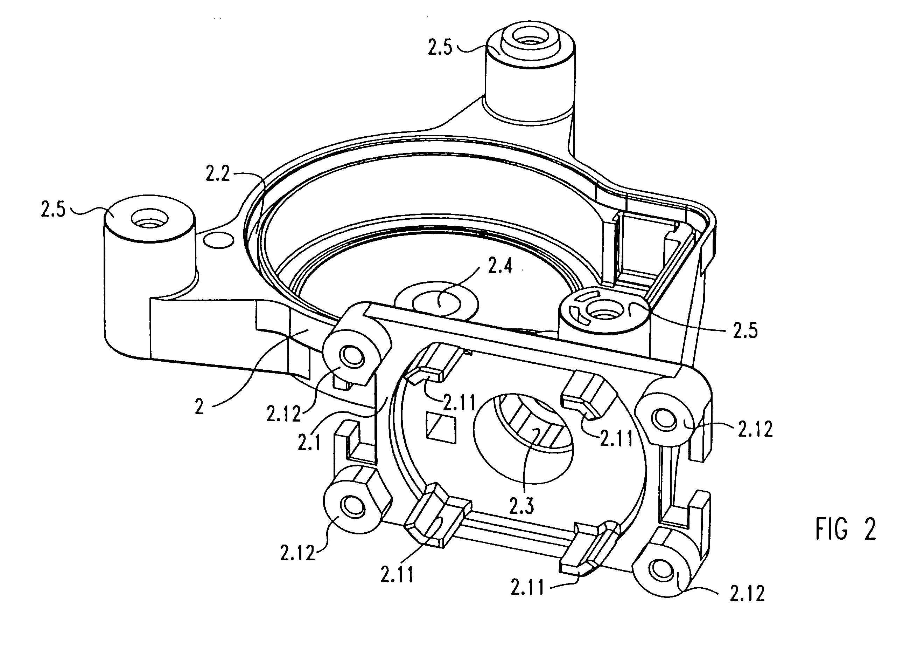

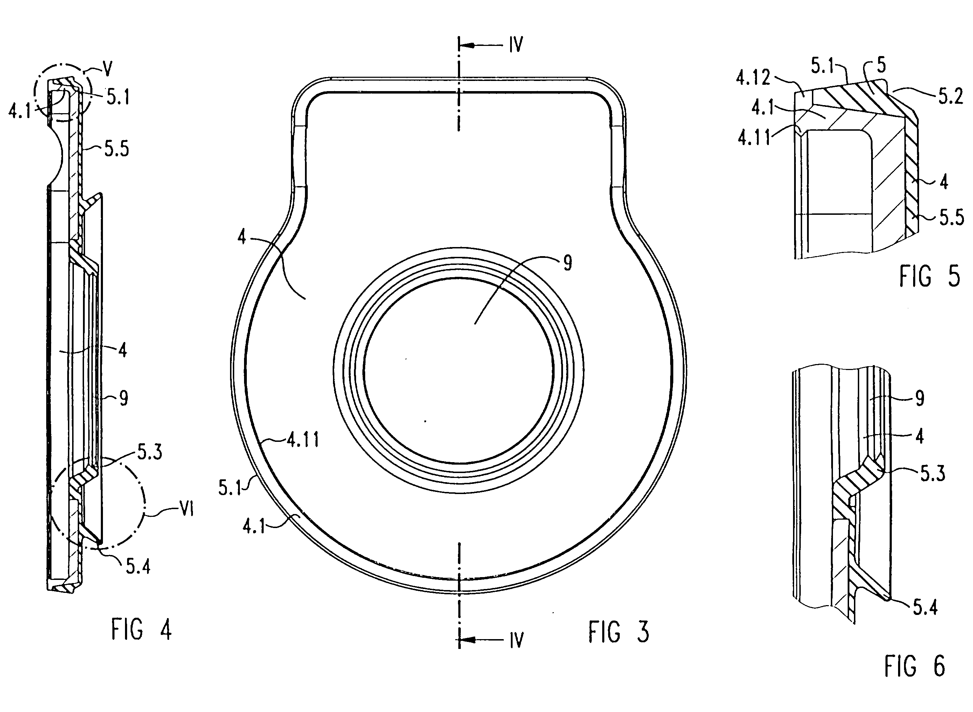

FIG 2 zeigt in perspektivischer Darstellung das noch unbestückte und noch nicht durch einen Getriebegehäusedeckel 4 gemäß FIG 3-6 feuchtigkeitsdicht verschlossene Getriebegehäuse 2. An dem Stirnflansch 2.1 sind axial vorstehende Führungstege 2.11 zur geführten Montage des Motorgehäuses 1 sowie Befestigungsaugen 2.12 angespritzt, an denen das Motorgehäuse 1 mit seinem Stirnflansch 1.1 anschraubbar ist. In der Aufnahme 2.4 wird eine Schneckenrad-Achse gehaltert, auf die das in FIG 1 dargestellte Schneckenrad 6 lagerbar ist. In die Lageröffnung 2.3 wird das Zylinderlager zur Lagerung der Motor-Getriebe-Welle gedrückt.

Das Getriebegehäuse 2 ist durch einen in FIG 3-6 näher dargestellten Getriebegehäusedeckel 4 verschließbar. Dazu ist in das Getriebegehäuse 2 eine umlaufende rinnenartige Nut 2.2 eingeformt, in die der Getriebegehäusedeckel 4 mit einem umlaufenden korrespondierenden Steg 4.1 kraftschlüssig haltend und abdichtend eindrückbar ist. Zur Sicherung einer hohen Haltekraft einerseits und trotzdem einer leichten Eindrückbarkeit andererseits weist der umlaufende Steg 4.1 an seiner Innenwandung zumindest eine senkrecht zur Einsteckrichtung umlaufende Schaberippe 4.11 auf, über die der Getriebegehäusedeckel 4 beim Eindrücken in die umlaufende Rinne 2.2 an deren Innenwandung anliegt. Eine besonders hohe Abdichtsicherheit kann dadurch gewährleistet werden, daß auf die Außenwandung des umlaufenden Steges 4.1 eine elastische Dichtungsauflage 5, insbesondere in Form eines sich nach außen keilartig erweiternden statischen Dichtrandes 5.1, aufgebracht ist, die an die andere Seitenwandung der umlaufenden Rinne 2.2 angedrückt wird. Aus fertigungs- bzw. montagetechnischen sowie designbedingten Gründen ist der Dichtrand 5.1 an seiner in Einsteckrichtung vorderen Kante von einem an den unelastischen, vorzugsweise aus Kunststoff gespritzten, Steg 4.1 angeformten Führungskante 4.12 untergriffen und weist an seiner in Einsteckrichtung hinteren Kante einen radial zurückspringenden Absatz 5.2 auf.

Der Getriebegehäusedeckel 4 ist mit einer zentrischen Mittelöffnung 9 versehen, durch die eine mit dem Schneckenrad 6 verbundene Abtriebswelle aus dem Getriebegehäusedeckel 4 herausführbar ist. Zur Abdichtung des Getriebegehäusedeckels 4 gegenüber der Abtriebswelle ist nach einer Ausgestaltung der Erfindung an den Getriebegehäusedeckel 4 eine dynamische Dichtlippe 5.3 angespritzt, die auf dem äußeren Umfang der hier nicht dargestellten Abtriebswelle dichtend zur Auflage kommt. Zur weiteren Abdichtung des Getriebegehäusedeckels 4 gegenüber einer Halterungswand, an der die gesamte Motor-Getriebe-Antriebseinheit über weitere Befestigungsaugen 2.5, z.B. an eine Zwischenwand in einer Kraftfahrzeug-Fahrzeugtür, anliegt, ist an den Getriebegehäusedeckel 4 eine axial vorstehende statische Dichtlippe 5.4 angespritzt. In fertigungstechnisch vorteilhafter Weise sind der statische Dichtrand 5.1 bzw. die dynamische Dichtlippe 5.3 und gegebenenfalls die statische Dichtlippe 5.4 einstückig mit einer auf die Außenstirnseite des Getriebegehäusedeckels 4 aufgebrachten Dichtfläche 5.5 ausgebildet.

## Patentansprüche

1. Motor-Getriebe-Antriebseinheit, insbesondere Kraftfahrzeug-Fensterheberantrieb oder dergleichen, mit einem Getriebegehäuse (2), das durch einen Getriebegehäusedeckel (4) feuchtigkeitsdicht verschließbar ist, **dadurch gekennzeichnet,** daß der Getriebegehäusedeckel (4) mit dem Getriebegehäuse (2) durch einen Einsteck-Klemmverschluß in Form eines in eine umlaufende rinnenartige Nut (2.2) des einen Bauteils eindrückbaren umlaufenden Steges (4.1) des anderen Bauteils kraftschlüssig verbindbar ist.

2. Motor-Getriebe-Antriebseineheit nach Anspruch 1, **dadurch gekennzeichnet,** daß der umlaufende Steg (4.1) an eine Seitenwandung der Nut (2.2) über eine Schaberippe (4.11) anliegt.

3. Motor-Getriebe-Antriebseinheit nach Anspruch 2, **gekennzeichnet durch** zumindest eine quer zur Einsteckrichtung umlaufende Schaberippe (4.11).

4. Motor-Getriebe-Antriebseinheit nach zumindest einem der Ansprüche 1-3, **dadurch gekennzeichnet,** daß der Steg (4.1) an eine Seitenwandung der Nut (2.2) über eine elastische statische Dichtungsauflage (5) angedrückt ist.

5. Motor-Getriebe-Antriebseinheit nach Anspruch 3, **gekennzeichnet durch** einen mit zunehmender Einstecktiefe keilartig, insbesondere mit zunehmender Wandstärke, verlaufenden statischen Dichtrand (5.1).

6. Motor-Getriebe-Antriebseinheit nach Anspruch 5, **dadurch gekennzeichnet,** daß der statische Dichtrand (5.1) an seinem vorderen Einsteckende von einer Führungskante (4.12) des Steges (4.1) untergriffen bzw. an seinem hinteren Einsteckende durch einen Absatz (5.2) radial zurückgesetzt ist.

7. Motor-Getriebe-Antriebseinheit nach zumindest einem der vorhergehenden Ansprüche 1-6, **dadurch gekennzeichnet,** daß die Nut (2.2) in das, insbesondere aus Kunststoff bestehende, Getriebegehäuse (2) und der umlaufende Steg (4.1) an den, insbesondere aus Kunststoff gebildeten, Getriegehäusedeckel (4) angeformt ist.

8. Motor-Getriebe-Antriebseinheit nach Anspruch 7, **dadurch gekennzeichnet,** daß die Schaberippe (4.1) an die Innenwandung des Steges (4) angeformt und der statische Dichtrand (5.1) auf die Außenwandung des Steges (4) aufgebracht, insbesondere aufvulkanisiert bzw. aufgespritzt, ist.

9. Motor-Getriebe-Antriebseinheit nach zumindest einem der vorhergehenden Ansprüche, **gekennzeichnet, durch** eine zentrische Durchstecköffnung (9) in dem Getriebegehäusedeckel (4) für eine Abtriebswelle und eine an dem Getriebegehäusedeckel (4) im Bereich der Durchstecköffnung (9) angebrachte, insbesondere aufvulkanisierte bzw. aufgespritzte, elastische dynamische Dichtlippe (5.3) als Abdichtung gegenüber der Abtriebswelle.

10. Motor-Getriebe-Antriebseinheit nach zumindest einem der Ansprüche 4-9, **dadurch gekennzeichnet,**daß der statische Dichtrand (5.1) bzw. die dynamische Dichtlippe (5.3) einstückig verbunden sind mit einer auf die Außenstirnseite des Getriebegehäusedeckels (4) aufgebrachten Dichtfläche (5.5).

## Claims

1. Motor-gear drive unit, particularly motor-vehicle window lifter drive or the like, with a gear case (2) which can be closed in a moisture-tight manner by means of a gear case cover (4), characterized in that the gear case cover (4) can be connected to the gear case (2) nonpositively by means of an insertable clamp fastening in the form of a peripheral web (4.1) capable of being pressed into a peripheral channel-like groove (2.2) of one component and belonging to the other component.

2. Motor-gear drive unit according to Claim 1, characterized in that the peripheral web (4.1) bears on a side wall of the groove (2.2) via a scraping rib (4.11).

3. Motor-gear drive unit according to Claim 2, characterized in that there is at least one peripheral scraping rib (4.11) extending transversely to the direction of insertion.

4. Motor-gear drive unit according to at least one of Claims 1 - 3, characterized in that the web (4.1) is pressed onto a side wall of the groove (2.2) via an elastic static gasket support (5).

5. Motor-gear drive unit according to Claim 3, characterized in that there is a static sealing edge (5.1) extending in a wedge-like manner with increasing depth of insertion, particularly with increasing wall thickness.

6. Motor-gear drive unit according to Claim 5, characterized in that the static sealing edge (5.1) has engaged under it, at its front insertion end, a guide edge (4.12) of the web (4.1) and is set back radially at its rear insertion end by means of a step (5.2).

7. Motor-gear drive unit according to at least one of the preceding Claims 1 to 6, characterized in that the groove (2.2) is moulded into the gear case (2), consisting particularly of plastic, and the peripheral web (4.1) is moulded onto the gear case cover (4), formed particularly from plastic.

8. Motor-gear drive unit according to Claim 7, characterized in that the scraping rib (4.1) is moulded onto the inner wall of the web (4), and the static sealing edge (5.1) is applied to, particularly vulcanized or injection-moulded onto, the outer wall of the web (4).

9. Motor-gear drive unit according to at least one of the preceding claims, characterized in that there is a central insertion orifice (9) in the gear case cover (4) for an output shaft and there is, as sealing relative to the output shaft, an elastic dynamic sealing lip (5.3) applied to, particularly vulcanized or injection-moulded onto, the gear case cover (4) in the region of the insertion orifice (9).

10. Motor-gear drive unit according to at least one of Claims 4 - 9, characterized in that the static sealing edge (5.1) and the dynamic sealing lip (5.3) are connected in one piece to a sealing face (5.5) applied to the outer end face of the gear case cover (4).

## Revendications

1. Unité d'entraînement à moto-réducteur, notamment système d'entraînement de lève-vitre de véhicule automobile ou système similaire, comprenant un carter de transmission (2) qui peut être fermé de manière étanche à l'humidité, par un couvercle (4) de carter de transmission, **caractérisée** en ce que le couvercle (4) du carter de transmission peut être relié au carter de transmission (2) par une liaison par adhérence, à l'aide d'une fermeture par serrage à emmanchement se présentant sous la forme d'une nervure (4.1) périphérique d'une des pièces pouvant être enfoncée dans une rainure (2.2) périphérique de l'autre pièce.

2. Unité d'entraînement à moto-réducteur selon la revendication 1, **caractérisée** en ce que la nervure (4.1) périphérique s'appuie sur une paroi latérale de la rainure (2.2) par l'intermédiaire d'une arête de raclage (4.11).

3. Unité d'entraînement à moto-réducteur selon la revendication 2, **caractérisée** par au moins une arête de raclage (4.11) s'étendant de manière périphérique et transversalement à la direction d'emmanchement.

4. Unité d'entraînement à moto-réducteur selon l'une au moins des revendications 1 à 3, **caractérisée** en ce que la nervure (4.1) est appliquée contre une paroi latérale de la rainure (2.2) par l'intermédiaire d'un revêtement d'étanchéité statique (5), élastique.

5. Unité d'entraînement à moto-réducteur selon la revendication 3, **caractérisée** par un bord d'étanchéité statique (5.1) s'étendant de manière cunéiforme en ayant une profondeur d'emmanchement croissante, notamment en ayant une épaisseur de paroi croissante.

6. Unité d'entraînement à moto-réducteur selon la revendication 5, **caractérisée** en ce que le bord d'étanchéité statique (5.1) est surmonté, à son extrémité avant d'emmanchement, d'une bordure de guidage (4.12) de la nervure (4.1), et est radialement en retrait par un décrochement (5.2), à son extrémité arrière d'emmanchement.

7. Unité d'entraînement à moto-réducteur selon l'une au moins des revendications précédentes 1 à 6, **caractérisée** en ce que la rainure (2.2) est formée par moulage par injection dans le carter de transmission (2), réalisé notamment en matière plastique, et la nervure (4.1) périphérique est formée par moulage par injection dans le couvercle (4) du carter de transmission réalisé notamment en matière plastique.

8. Unité d'entraînement à moto-réducteur selon la revendication 7, **caractérisée** en ce que l'arête de raclage (4.11) est formée par moulage par injection sur la paroi intérieure de la nervure (4.1), et le bord d'étanchéité statique (5.1) est rapporté sur la paroi extérieure de la nervure (4.1), notamment rapporté par vulcanisation ou rapporté par projection.

9. Unité d'entraînement à moto-réducteur selon au moins l'une des revendications précédentes, **caractérisée** par une ouverture de passage (9) centrale, ménagée dans le couvercle (4) du carter de transmission. destinée à un arbre de sortie, et par une lèvre d'étanchéité dynamique (5.3), élastique, placée, notamment rapportée par vulcanisation ou rapportée par projection, sur le couvercle (4) du carter de transmission, dans la zone de l'ouverture de passage (9), et servant de garniture d'étanchéité par rapport à l'arbre de sortie.

10. Unité d'entraînement à moto-réducteur selon au moins l'une des revendications 4 à 9, **caractérisée** en ce que le bord d'étanchéité statique (5.1) et la lèvre d'étanchéité dynamique (5.3) sont reliés d'un seul tenant à une surface d'étanchéité (5.5) rapportée sur le côté frontal extérieur du couvercle (4) du carter de transmission.
